# EUROPÄISCHE PATENTANMELDUNG

(11) **EP 3 722 122 A1**
(43) Veröffentlichungstag der Anmeldung: **14.10.2020**
(21) Anmeldenummer: 20168429.7
(22) Anmeldetag: 07.04.2020
(51) Int. Cl.: B60G 9/02, B60G 9/00, B60G 21/045, B60K 1/02

(54) **FAHRZEUGBAUGRUPPE FÜR EIN INSBESONDERE GELÄNDEGÄNGIGES NUTZFAHRZEUG**

(30) Priorität: 12.04.2019 DE 102019109764
(71) Anmelder: General Dynamics European Land Systems - Mowag GmbH, 8280 Kreuzlingen (CH)
(72) Erfinder: Kulcsar, Jürgen, 78465 Konstanz (DE); Schroeter, Jens, 89274 Tägerwilen (CH)
(74) Vertreter: BSB Patentanwälte Schütte & Engelen Partnerschaft mbB

(57) **Zusammenfassung**

Fahrzeugbaugruppe (1) für ein geländegängiges Nutzfahrzeug (100), umfassend ein Fahrgestell (2) und einen Triebstrang (12) mit einer Brennkraftmaschine (22) und zwei Starrachseinheiten (3).

Die Starrachseinheiten (3) umfassen jeweils einen Schubrohrrahmen (4). Die Schubrohrrahmen (4) der Starrachseinheiten (3) sind mittels wenigstens einer am Fahrgestell (2) befestigten Wankstabilisatoreinrichtung (5) gelenkartig miteinander verbunden. Dabei umfasst der Triebstrang (12) eine von der Brennkraftmaschine (22) antreibbare und in Vorwärtsfahrtrichtung vor und/oder hinter der Wankstabilisatoreinrichtung (5) angeordnete elektrische Maschine (16) .

## Beschreibung

Die vorliegende Erfindung betrifft eine Fahrzeugbaugruppe für ein insbesondere geländegängiges Nutzfahrzeug mit wenigstens einem Fahrgestell und wenigstens einem an dem Fahrgestell aufnehmbaren Triebstrang. Der Triebstrang umfasst wenigstens eine Brennkraftmaschine und wenigstens zwei Starrachseinheiten mit jeweils wenigstens einem Schubrohrrahmen.

Derartige Fahrzeuge eignen sich besonders gut für das Fahren in schwierigstem Gelände. Um die Geländeeigenschaften und die Fahrsicherheit weiter zu verbessern, ist mit der CH 663 767 A5 ein Stabilisator zur Minderung der bei solchen Fahrzeugen auftretenden Wankbewegungen bekannt geworden. Dabei sind die starren Achsen mit jeweils einer Deichselvorrichtung zu einem trapezförmigen Schubrohrrahmen ausgebildet. Die Schubrohrrahmen sind an dem Fahrzeugrahmen bzw. Fahrgestell über entsprechende Lenker in einem Längs- und Querverbund angelenkt.

Demgegenüber ist es die Aufgabe der vorliegenden Erfindung, die Nutzungsmöglichkeiten eines solchen Fahrzeugs zu verbessern und vorzugsweise flexibler zu gestalten und dabei zugleich die besondere Geländegängigkeit auszunutzen bzw. nicht einzuschränken.

Diese Aufgabe wird durch eine Fahrzeugbaugruppe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Die erfindungsgemäße Fahrzeugbaugruppe ist für ein insbesondere geländegängiges Nutzfahrzeug vorgesehen. Die Fahrzeugbaugruppe umfasst wenigstens ein Fahrgestell und wenigstens einen an dem Fahrgestell aufnehmbaren Triebstrang. Der Triebstrang umfasst wenigstens eine Brennkraftmaschine und wenigstens zwei Starrachseinheiten. Insbesondere ist wenigstens eine der wenigstens zwei Starrachseinheiten antreibbar bzw. angetrieben ausgebildet. Besonders bevorzugt umfasst der Triebstrang wenigstens zwei antreibbare Starrachseinheiten. Es ist möglich und bevorzugt, dass alle vorgesehenen Starrachseinheiten antreibbar ausgebildet sind. Die Starrachseinheiten umfassen jeweils wenigstens einen Schubrohrrahmen. Die Schubrohrrahmen der wenigstens zwei Starrachseinheiten sind mittels wenigstens einer am Fahrgestell befestigten Wankstabilisatoreinrichtung gelenkartig miteinander verbunden und vorzugsweise über die gemeinsame Wankstabilisatoreinrichtung an das Fahrgestell schwenkbar angebunden. Dabei umfasst der Triebstrang wenigstens eine von der Brennkraftmaschine antreibbare und in Vorwärtsfahrtrichtung vor und/oder hinter der Wankstabilisatoreinrichtung angeordnete elektrische Maschine. Der Triebstrang kann wenigstens zwei oder eine Mehrzahl von elektrischen Maschinen umfassen, welche jeweils entweder vor oder hinter der Wankstabilisatoreinrichtung angeordnet sind.

Die elektrische Maschine dient insbesondere wenigstens teilweise als Fahrantrieb und/oder zur elektrischen Energieversorgung eines wenigstens teilweise elektrischen Fahrantriebs. Dabei kann der Fahrantrieb durch die elektrische Maschine auch mittelbar versorgt werden, z. B. durch Laden einer Batterieeinrichtung.

Die erfindungsgemäße Fahrzeugbaugruppe bietet viele Vorteile. Einen erheblichen Vorteil bietet die erfindungsgemäße Anordnung der elektrischen Maschine. Dadurch kann z. B. ein Hybridantrieb verwirklicht werden, welcher optimal in die Komponenten für die besondere Geländegängigkeit integriert ist und die besonderen Fahreigenschaften sogar noch unterstützt bzw. weiter verbessert. Ebenso vorteilhaft kann damit eine Teilelektrifizierung von automotiven Baugruppen bzw. Komponenten umgesetzt werden. Die Erfindung bietet eine besonders vorteilhafte Einbindung der elektrischen Maschine hinsichtlich der Wankstabilisierung.

Der Schubrohrrahmen stellt insbesondere einen Achskörper der Starrachseinheit dar und ist vorzugsweise als Deichsel bzw. deichselartig ausgeführt. Der Schubrohrrahmen ist insbesondere in der Art einer Deichsel bewegbar an das Fahrgestell angebunden. Insbesondere sind die Schubrohrrahmen über jeweils wenigstens eine Gelenkeinrichtung, hier als Zentralgelenk bezeichnet, bewegbar an dem Fahrgestell befestigt. Dabei können die Zentralgelenke als Kugelgelenke und/oder Kugelflächengelenke und/oder Gummipuffer oder dergleichen ausgeführt sein. Dabei sind die Zentralgelenke vorzugsweise an einem Querrohr des Schubrohrrahmens angebunden. Die Gelenkeinrichtung dient insbesondere zur Längsführung des Schubrohrrahmens bzw. der Deichsel.

Durch das Zentralgelenk werden vorzugsweise im Wesentlichen Längskräfte aufgenommen insbesondere unter Gewährleistung der Achsbewegungen Einfedern (Rotation um y-Achse des Fahrzeugkoordinatensystems) und Verschränken (Rotation um x-Achse). Zur Querführung der Schubrohrrahmen bzw. der Deichseln umfassen die Starrachseinheiten vorzugsweise jeweils wenigstens eine Querführungseinrichtung. Die Querführungseinrichtung umfasst insbesondere wenigstens eine Gestängeeinrichtung, welche über Gelenke ebenfalls mit dem Fahrgestell bzw. Aufbau verbunden ist. Die Querführungseinrichtung kann wenigstens einen Panhardstab und/oder Wattgestänge und/oder wenigstens eine Scherenführung umfassen oder derart ausgebildet sein.

Vorzugsweise sind die zuvor beschriebenen Starrachseinheiten sowohl für die Vorderachseinheit als auch für die Hinterachseinheit vorgesehen. Miteinander verbunden sind die Starrachseinheiten vorzugsweise über wenigstens einen schwenkbaren Waagbalken der Wankstabilisatoreinrichtung. Der Waagbalken ist insbesondere drehbar an dem Fahrgestell angebunden. Die Starrachseinheiten sind insbesondere über jeweils wenigstens ein Gelenk bzw. gelenkartig mit dem Waagbalken verbunden.

In allen Ausgestaltungen ist es bevorzugt, dass die Starrachseinheiten als De-Dion-Achsen ausgebildet sind oder wenigstens eine solche umfassen. Möglich ist auch, dass wenigstens eine der Starrachseinheiten als De-Dion-Achse ausgebildet ist oder wenigstens eine solche umfasst. Dadurch können ungefederte bzw. ungedämpfte Massen besonders vorteilhaft verringert werden. Bevorzugt ist eine zum Antreiben der jeweiligen Starrachseinheit dienende und insbesondere mit einer Getriebeeinrichtung wirkverbundene Antriebsverbindung außerhalb des Schubrohrrahmens bzw. eines Achsrohrs angeordnet. Die Starrachseinheiten umfassen insbesondere jeweils wenigstens eine Starrachse. Es ist aber auch möglich, dass die Starrachseinheiten als Halbstarrachsen ausgebildet sind oder wenigstens eine solche umfassen, beispielsweise eine Verbundlenkerachse oder dergleichen.

Vorzugsweise weisen die Starrachseinheiten jeweils wenigstens ein Ausgleichsgetriebe auf. Dabei sind die Ausgleichsgetriebe vorzugsweise außerhalb der Schubrohrrahmen angeordnet. Es können auch andere Antriebsverbindungen außerhalb des Schubrohrrahmens angeordnet sein. Das Ausgleichsgetriebe kann auch als Achs-Differenzial bezeichnet werden.

In allen Ausgestaltungen ist es bevorzugt, dass die elektrische Maschine außerhalb des Schubrohrrahmens angeordnet ist. Insbesondere ist die elektrische Maschine über außerhalb des Schubrohrrahmens verlaufende Antriebsverbindungen, z. B. Antriebswellen, mit wenigstens einem Rad bzw. mit den Rädern wirkverbunden.

Die elektrische Maschine stellt vorzugsweise wenigstens einen Generator bereit oder ist als ein solcher ausgebildet. Die elektrische Maschine kann auch wenigstens einen Elektromotor bereitstellen oder als ein solcher ausgebildet sein. Es ist möglich, dass die elektrische Maschine dazu geeignet und ausgebildet ist, sowohl einen Generator als auch einen Elektromotor bereitzustellen.

Wenn die elektrische Maschine als Elektromotor eingesetzt wird, kann vorgesehen sein, dass die elektrische Maschine alternativ und/oder zusätzlich bzw. gleichzeitig zu der Brennkraftmaschine wenigstens einen Teil des für eine Fahrzeugfortbewegung vorgesehenen Drehmoments bereitstellt. Insbesondere ist die elektrische Maschine als Fahrmotor ausgebildet oder umfasst wenigstens einen solchen. Es ist möglich, dass die Vorderachseinheit und/oder die Hinterachseinheit mittels der (ersten) elektrischen Maschine antreibbar ist. Insbesondere ist durch die elektrische Maschine dann das Hauptgetriebe und/oder wenigstens eine der nachgeschalteten Komponenten und/oder das Verteilergetriebe und/oder wenigstens eines der Ausgleichsgetriebe antreibbar. Es ist möglich, dass die elektrische Maschine an einem Ausgleichsgetriebe wenigstens einer Starrachseinheit und beispielsweise der Vorderachseinheit und/oder der Hinterachseinheit angebunden ist. Wenn die elektrische Maschine als Generator eingesetzt wird, ist eine Leistung des Generators insbesondere so bemessen, dass der Generator wenigstens die Hälfte und vorzugsweise wenigstens drei Viertel und besonders bevorzugt wenigstens die gesamte der zum Fahren bzw. für wenigstens einen Fahrmotor notwendigen Leistung erbringen kann.

Der Triebstrang umfasst insbesondere wenigstens eine Getriebeeinrichtung mit wenigstens einem Hauptgetriebe und/oder mit wenigstens einem Verteilergetriebe. Insbesondere stellt die Getriebeeinrichtung für jede antreibbare Starrachseinheit jeweils wenigstens ein Ausgleichsgetriebe bzw. Differenzialgetriebe bereit, welches insbesondere wenigstens teilweise oder vollständig sperrbar ist. Das Verteilergetriebe kann auch wenigstens ein Ausgleichsgetriebe umfassen, welches insbesondere wenigstens teilweise oder vollständig sperrbar ist. Das Hauptgetriebe kann als ein manuelles oder ein teilautomatisches oder ein vollautomatisches Getriebe ausgebildet sein. Das Hauptgetriebe umfasst insbesondere ein Schaltgetriebe oder ist als ein solches ausgebildet. Der Triebstrang kann wenigstens ein Rad umfassen. Das Hauptgetriebe und/oder das Verteilergetriebe und/oder das Ausgleichsgetriebe sind insbesondere rahmenfest angeordnet.

Vorzugsweise ist die elektrische Maschine zur elektrischen Energieerzeugung unabhängig von einem Fahrbetrieb mittels der Brennkraftmaschine antreibbar. Bevorzugt ist auch, dass die elektrische Maschine zur elektrischen Energieerzeugung nur bei einem Fahrbetrieb mittels der Brennkraftmaschine antreibbar ist. Dabei stellt die elektrische Maschine insbesondere einen Generator bereit oder ist als ein solcher ausgebildet. Die elektrische Maschine kann einer Getriebeeinrichtung und insbesondere einem Hauptgetriebe mit Leerlaufstellung vorgeschaltet sein. Dann kann die elektrische Maschine von der Brennkraftmaschine angetrieben werden, während die Getriebeeinrichtung sich im Leerlauf befindet. So kann bei einem stehenden Fahrzeug mit der elektrischen Maschine Strom erzeugt werden. Möglich ist auch, dass die elektrische Maschine einer Getriebeeinrichtung und insbesondere einem Hauptgetriebe nachgeschaltet ist. Dann wird die elektrische Maschine insbesondere nur dann mittels der Brennkraftmaschine angetrieben, wenn sich das Fahrzeug in Bewegung befindet. Möglich ist auch, dass die elektrische Maschine durch einen Fahrbetrieb bzw. Schubbetrieb antreibbar ist. Insbesondere ist die elektrische Maschine zu Energierückgewinnung bzw. Rekuperation geeignet und ausgebildet. Das Hauptgetriebe und die elektrische Maschine können zeitgleich oder auch zeitversetzt von der Brennkraftmaschine antreibbar sein.

Der Triebstrang umfasst insbesondere wenigstens eine von der Brennkraftmaschine antreibbare Getriebeeinrichtung mit vorzugsweise wenigstens einem Hauptgetriebe. Insbesondere ist die elektrische Maschine zwischen der Brennkraftmaschine und dem Hauptgetriebe eingebunden. Insbesondere ist die elektrische Maschine so eingebunden, dass ein Drehmoment von der Brennkraftmaschine auf die elektrische Maschine und insbesondere zugleich auch zu dem Hauptgetriebe übertragbar ist. Insbesondere ist die elektrische Maschine zwischen der Brennkraftmaschine und der Wankstabilisatoreinrichtung angeordnet. Vorzugsweise ist die elektrische Maschine benachbart zu der Wankstabilisatoreinrichtung angeordnet.

Es ist möglich, dass die elektrische Maschine direkt an die Getriebeeinrichtung und insbesondere an das Hauptgetriebe angebunden ist. Die elektrische Maschine kann an einen Nebenabtrieb des Hauptgetriebes gekoppelt sein. Insbesondere umfasst das Hauptgetriebe und/oder das Verteilergetriebe wenigstens einen zu und abschaltbaren Nebenabtrieb. Möglich ist auch, dass die elektrische Maschine direkt an die Brennkraftmaschine angebunden ist, beispielsweise an deren Schwungrad.

In allen Ausgestaltungen ist die elektrische Maschine insbesondere kuppelbar in den Triebstrang eingebunden. Dadurch kann die elektrische Maschine gezielt von einer Antriebsseite und/oder Abtriebsseite getrennt werden bzw. mit einer Antriebsseite und/oder Abtriebsseite drehmomentübertragend verbunden werden. Insbesondere ist der elektrischen Maschine wenigstens eine manuelle oder automatische Kupplung zugeordnet.

Vorzugsweise verläuft unterhalb der Wankstabilisatoreinrichtung wenigstens eine Welle zu Drehmomentübertragung zwischen Brennkraftmaschine und Hauptgetriebe. Dabei ist durch die Welle vorzugsweise auch die elektrische Maschine antreibbar. Insbesondere ist die elektrische Maschine an diese Welle gekoppelt. Das bietet eine besonders vorteilhafte Positionierung der elektrischen Maschine im Triebstrang, beispielsweise hinsichtlich Geländegängigkeit, Wankstabilität und Gewichtsverteilung. Die Welle ist beispielsweise als eine Gelenkwelle ausgebildet oder umfasst wenigstens eine solche.

Der Triebstrang umfasst vorzugsweise wenigstens eine Getriebeeinrichtung mit wenigstens einem Verteilergetriebe. Das Verteilergetriebe ist insbesondere direkt an eines der Ausgleichsgetriebe angebunden. Dabei ist die elektrische Maschine vorzugsweise zwischen dem Verteilergetriebe und einem nicht direkt an das Verteilergetriebe angebundenen Ausgleichsgetriebe eingebunden. Eine solche Anordnung der elektrischen Maschine wirkt sich besonders vorteilhaft auf die Fahrstabilität und die Geländegängigkeit aus.

Insbesondere ist der Triebstrang in einer Transaxle-Bauweise ausgeführt. Insbesondere ist das Hauptgetriebe direkt an das Verteilergetriebe angebunden. Insbesondere ist das Hauptgetriebe nicht direkt an die Brennkraftmaschine angebunden. Insbesondere ist das Hauptgetriebe über wenigstens eine Welle mit der Brennkraftmaschine verbunden. Insbesondere sind das Hauptgetriebe und/oder das Verteilergetriebe näher an dem Ausgleichsgetriebe einer Hinterachseinheit als an der Brennkraftmaschine angeordnet. Insbesondere ist das Verteilergetriebe direkt an das Ausgleichsgetriebe einer Hinterachseinheit angebunden. Insbesondere ist das Verteilergetriebe über wenigstens eine Welle mit einem Ausgleichsgetriebe der ersten Achseinheit bzw. der Vorderachseinheit verbunden. Die elektrische Maschine kann auch direkt an das Verteilergetriebe angebunden sein. Möglich ist auch, dass das Verteilergetriebe über wenigstens eine Welle an das Ausgangsgetriebe angebunden ist.

Zwischen dem Verteilergetriebe und dem nicht direkt an das Verteilergetriebe angebundenen Ausgleichsgetriebe verläuft insbesondere wenigstens eine Wellenanordnung zur Drehmomentübertragung. Die Wellenanordnung umfasst insbesondere wenigstens eine Welle. Dabei ist die elektrische Maschine durch wenigstens eine unterhalb der Wankstabilisatoreinrichtung verlaufende und vorzugsweise an dem Fahrgestell drehbar gelagert befestigte Welle der Wellenanordnung antreibbar. Eine solche Anordnung der elektrischen Maschine am Triebstrang wirkt sich besonders vorteilhaft auf die Wankstabilität und Geländegängigkeit aus. Diese Welle verläuft insbesondere unterhalb des Schubrohrrahmens. Diese Welle kann auch zwischen der Wankstabilisatoreinrichtung und dem Schubrohrrahmen verlaufen. Insbesondere verläuft diese Welle unterhalb eines Waagbalkenlager und/oder eines Querträgers der Wankstabilisatoreinrichtung. Die Wellenanordnung umfasst insbesondere wenigstens drei Wellen. Zwei der Wellen sind insbesondere an die unterhalb der Wankstabilisatoreinrichtung verlaufende Welle gekoppelt und entweder mit dem Verteilergetriebe oder dem Ausgleichsgetriebe verbunden.

In einer besonders vorteilhaften Ausgestaltung ist die elektrische Maschine dazu geeignet und ausgebildet, elektrisch betreibbare Nebenaggregate mit Energie zu versorgen und insbesondere unmittelbar zu versorgen. Unter einer unmittelbaren Versorgung wird beispielsweise eine Versorgung ohne eine Zwischenspeicherung in einer Hochvoltbatterie verstanden. Dabei stellt die elektrische Maschine insbesondere wenigstens einen Generator bereit oder ist als ein solcher ausgebildet. Die Nebenaggregate sind insbesondere mit Elektromotoren oder anderen elektrischen Verbrauchern ausgestattet. Die Nebenaggregate umfassen beispielsweise Lüftermotoren, Verbrennungsluft-Lader, Pumpen, Kompressoren, elektronische oder elektrohydraulische oder elektropneumatische Anlagen. Eine solche Ausgestaltung bietet eine besonders unaufwendige und zugleich bauraumsparende Integration von Nebenaggregaten bzw. Anbaugeräten in ein geländegängiges Fahrzeug.

In einer Ausgestaltung ist der elektrischen Maschine wenigstens eine Schwungradeinrichtung als Energiespeicher zugeordnet. Die Schwungradeinrichtung kann auch als ein Flywheel bezeichnet werden. Beispielsweise kann die Schwungradeinrichtung beim Verzögern des Fahrzeugs bzw. im Schubbetrieb angetrieben werden und dadurch Energie speichern. Anschließend kann die Schwungradeinrichtung die elektrische Maschine antreiben, damit diese elektrischen Strom erzeugt.

In einer vorteilhaften Weiterbildung umfasst der Triebstrang wenigstens eine zweite elektrische Maschine. Die zuvor beschriebene elektrische Maschine ist dann insbesondere eine erste elektrische Maschine, sodass die Begriffe "elektrische Maschine" und "erste elektrische Maschine" synonym verwendet werden können. Dabei ist wenigstens eine der Starrachseinheiten und insbesondere eine Vorderachseinheit nur mittels der zweiten elektrischen Maschine antreibbar. Das bietet eine besonders vorteilhafte Umsetzung einer angetriebenen Vorderachseinheit. Möglich ist auch, dass wenigstens die Hinterachseinheit nur mittels der zweiten elektrischen Maschine antreibbar ist.

Insbesondere ist die mittels der zweiten elektrischen Maschine angetriebene Starrachseinheit nicht mit dem Hauptgetriebe verbunden. Insbesondere ist für diese Starrachseinheit auch kein Verteilergetriebe vorgesehen. Das bietet eine erhebliche Reduzierung von Gewicht und eine erhebliche Bereitstellung von Bauraum. Insbesondere ist die Starrachseinheit, welche nicht mittels der zweiten elektrischen Maschine antreibbar ist und insbesondere die Hinterachseinheit mittels der Brennkraftmaschine und/oder des Hauptgetriebes antreibbar. Dabei ist möglich, dass das Hauptgetriebe alternativ und/oder zusätzlich bzw. gleichzeitig zu der Brennkraftmaschine wenigstens zeitweise auch mittels der ersten elektrischen Maschine antreibbar ist. Das ermöglicht beispielsweise einen parallelen Hybridantrieb.

Es ist möglich, dass die von der zweiten elektrischen Maschine antreibbare Starrachseinheit alternativ und/oder zusätzlich bzw. gleichzeitig von der Brennkraftmaschine und insbesondere über das Verteilergetriebe antreibbar ist. Die zweite elektrische Maschine stellt insbesondere wenigstens einen Elektromotor bereit oder ist als ein solcher ausgebildet.

Der Schubrohrrahmen umfasst insbesondere wenigstens eine zwischen den Rädern verlaufende Querachse. Die Querachse ist insbesondere eine De-Dion-Achse oder Teil einer solchen. Dabei ist die zweite elektrische Maschine oberhalb der Querachse und insbesondere in Vorwärtsfahrtrichtung vor dem Ausgleichsgetriebe der von der zweiten elektrischen Maschine antreibbaren Starrachseinheit angeordnet. Die elektrische Maschine kann auch in Vorwärtsfahrtrichtung hinter dem Ausgleichsgetriebe der von der zweiten elektrischen Maschine antreibbaren Starrachseinheit angeordnet sein. Die elektrische Maschine ist insbesondere direkt an das Ausgleichsgetriebe angebunden. Solche Anordnungen der elektrischen Maschine bieten viele Vorteile.

In einer vorteilhaften Weiterbildung ist der Triebstrang in einem Allradbetrieb betreibbar. Im Allradbetrieb ist bevorzugt, dass die zweite elektrische Maschine ein Drehmoment auf eine Vorderachseinheit und die Brennkraftmaschine ein Drehmoment auf wenigstens eine Hinterachseinheit überträgt. Ein solcher Allradantrieb bietet viele Vorteile und ermöglicht beispielsweise eine gezielte Anpassung des Drehmoments, welches auf die jeweilige Achse einwirken soll.

Es ist möglich, dass der Triebstrang wenigstens eine dritte elektrische Maschine umfasst. Dabei ist wenigstens eine der Starrachseinheiten und insbesondere die Hinterachseinheit nur mittels der dritten elektrischen Maschine antreibbar. Die dritte elektrische Maschine stellt insbesondere einen Elektromotor bereit oder ist als ein solcher ausgebildet. Dabei ist die mittels der dritten elektrischen Maschine angetriebene Starrachseinheit insbesondere nicht mit der Brennkraftmaschine und vorzugsweise nicht mit dem Hauptgetriebe verbunden. Insbesondere sind in einer solchen Ausgestaltung kein Hauptgetriebe und kein Verteilergetriebe vorgesehen. Insbesondere sind in einer solchen Ausgestaltung alle Starrachseinheiten nur mittels elektrischen Maschinen antreibbar. Es ist bevorzugt, dass mittels der Brennkraftmaschine nur die erste elektrische Maschine antreibbar ist. Das ermöglicht einen besonders vorteilhaften seriellen Hybridantrieb. In einer solchen Ausgestaltung ist der Triebstrang insbesondere als ein serieller Hybridantrieb ausgebildet. Insbesondere weist die Brennkraftmaschine dann keine drehmomentübertragende Verbindung zu den Starrachseinheiten auf.

Zusätzlich oder alternativ kann die zweite elektrische Maschine einen Generator bereitstellen, beispielsweise bei Bremsvorgängen. Zusätzlich oder alternativ kann die dritte elektrische Maschine einen Generator bereitstellen. Insbesondere sind die erste und/oder zweite und/oder dritte elektrische Maschine in Vorwärtsfahrtrichtung vor und/oder hinter der Wankstabilisatoreinrichtung angeordnet. Die zuvor beschriebene elektrische Maschine kann die erste und/oder zweite und/oder dritte elektrische Maschine sein. Vorzugsweise ist wenigstens eine als Fahrantrieb dienende elektrischen Maschine vor der Wankstabilisatoreinrichtung angeordnet. Vorzugsweise ist auch wenigstens eine als Fahrantrieb dienende elektrischen Maschine hinter der Wankstabilisatoreinrichtung angeordnet. Vorzugsweise ist wenigstens eine zur elektrischen Energieversorgung des Fahrantriebs dienende elektrischen Maschine vor oder hinter der Wankstabilisatoreinrichtung angeordnet.

Der Schubrohrrahmen umfasst vorzugsweise wenigstens eine zwischen zwei Rädern verlaufende Querachse. Dabei ist die dritte elektrische Maschine vorzugsweise oberhalb der Querachse und bevorzugt in Vorwärtsfahrtrichtung hinter dem Ausgleichsgetriebe der von der dritten elektrischen Maschine antreibbaren Starrachseinheit angeordnet. Möglich ist auch, dass die dritte elektrische Maschine in Vorwärtsfahrtrichtung vor dem Ausgleichsgetriebe angeordnet ist. Insbesondere ist die dritte elektrische Maschine direkt an das Ausgleichsgetriebe angebunden. Eine solche Anordnung der dritten elektrischen Maschine bietet viele Vorteile.

Es ist möglich, dass im Allradbetrieb die zweite elektrische Maschine ein Drehmoment auf eine erste Achseinheit, insbesondere die Vorderachseinheit, überträgt und dass und die dritte elektrische Maschine ein Drehmoment auf eine zweite Achseinheit, insbesondere die Hinterachseinheit, überträgt.

Die elektrische Maschine stellt insbesondere einen Fahrmotor bereit. Vorzugsweise ist die elektrische Maschine an ein Ausgleichsgetriebe angebunden. Insbesondere ist die elektrische Maschine an dem Ausgleichsgetriebe angebunden, welches durch sie antreibbar ist. Insbesondere ist die elektrische Maschine dabei als ein Achsmotor ausgebildet oder umfasst wenigstens einen solchen. Es ist möglich, dass im Allradbetrieb eine elektrische Maschine ein Drehmoment auf eine erste Achseinheit, insbesondere die Vorderachseinheit, überträgt und dass eine weitere elektrische Maschine ein Drehmoment auf eine zweite Achseinheit, insbesondere die Hinterachseinheit, überträgt.

Es ist möglich und vorteilhaft, dass der Triebstrang wenigstens eine vor der Wankstabilisatoreinrichtung angeordnete zweite elektrische Maschine zum Antrieb einer Vorderachseinheit und wenigstens eine hinter der Wankstabilisatoreinrichtung angeordnete dritte elektrische Maschine zum Antrieb einer Hinterachseinheit umfasst. Dabei stellen die elektrischen Maschinen jeweils wenigstens ein Ausgleichsgetriebe der Vorderachseinheit bzw. der Hinterachseinheit bereit. Insbesondere ersetzen die elektrischen Maschinen das für die jeweilige Achseinheit sonst notwendige Ausgleichsgetriebe. Durch die Verlagerung bzw. den Verzicht von Antriebselementen werden Bauräume geschaffen, die vorteilhaft als Bauräume bzw. Bewegungsräume für die Wankstabilisatoreinrichtung genutzt werden können. Insbesondere ist die elektrische Maschine dabei als ein Achsmotor ausgebildet oder umfasst wenigstens einen solchen.

In einer vorteilhaften und bevorzugten Weiterbildung ist die wenigstens eine elektrische Maschine, insbesondere die erste elektrische Maschine, dazu geeignet und ausgebildet, von der Brennkraftmaschine angetrieben zu werden und dabei wenigstens eine Batterie wenigstens einer Batterieeinrichtung zur Energieversorgung wenigstens einer als Fahrantrieb dienenden elektrischen Maschine, insbesondere der zweiten und/oder dritten elektrischen Maschine, aufzuladen. Möglich ist auch, dass die erste elektrische Maschine dazu geeignet und ausgebildet ist, durch einen Schubbetrieb angetrieben zu werden und dabei die Batterie aufzuladen. Die Batterie ist insbesondere als eine Hochvoltbatterie ausgebildet und umfasst wenigstens ein Batteriemodul mit einer Vielzahl von Batteriezellen.

Dabei ist die Batterie mittels wenigstens einer Aufnahmeeinrichtung in Vorwärtsfahrtrichtung vor oder hinter der Wankstabilisatoreinrichtung an dem Fahrgestell befestigt. Insbesondere ist die Batterie mittels der Aufnahmeeinrichtung wenigstens teilweise, vorzugsweise vollständig, oberhalb eines der wenigstens zwei Schubrohrrahmen an dem Fahrgestell befestigt. Besonders bevorzugt ist die Aufnahmeeinrichtung dazu geeignet und ausgebildet, die Batterie zwischen zwei Längsträgern des Fahrgestells aufzunehmen. Insbesondere umfasst das Fahrgestell wenigstens einen rechten und wenigstens einen linken Längsträger. Insbesondere stellt die Aufnahmeeinrichtung wenigstens einen Aufnahmeraum für die Batterie bereit. Eine solche Aufnahmeeinrichtung bietet bei der Umsetzung eines Hybridantriebs viele Vorteile.

Die Aufnahmeeinrichtung ist vorzugsweise dazu geeignet und ausgebildet, wahlweise die wenigstens eine Batterie oder wenigstens ein drehmomentübertragend mit der Brennkraftmaschine gekoppeltes Hauptgetriebe einer Getriebeeinrichtung an das Fahrgestell anzubinden. Möglich ist auch, dass die Aufnahmeeinrichtung dazu geeignet und ausgebildet ist, wahlweise die wenigstens eine Batterie oder die Brennkraftmaschine an das Fahrgestell anzubinden. Eine solche Aufnahmeeinrichtung bietet ein besonders unaufwendiges Konzept, um ein Fahrzeug mit alternativen Antrieben zu wechseln. Ein solcher Wechsel kann beispielsweise im Rahmen der Herstellung oder auch im Rahmen einer Wartung des Fahrzeugs vorgesehen sein. Wenn die Batterie an die Aufnahmeeinrichtung gekoppelt ist und kein Hauptgetriebe vorgesehen ist, ist die erste elektrische Maschine insbesondere direkt an die Brennkraftmaschine gekoppelt. Dann sind die zweite und dritte elektrische Maschine vorzugsweise an jeweils ein Ausgleichsgetriebe gekoppelt.

Es ist möglich, dass die Batterieeinrichtung wenigstens zwei Batterien umfasst. Dabei ist die Aufnahmeeinrichtung vorzugsweise dazu geeignet und ausgebildet, wenigstens eine Batterie an einem rechten Längsträger des Fahrgestells zu befestigen. Die Aufnahmeeinrichtung ist insbesondere dazu geeignet und ausgebildet, wenigstens eine Batterie an einem linken Längsträger des Fahrgestells zu befestigen. Insbesondere erstreckt sich dabei wenigstens ein Teil der Getriebeeinrichtung, insbesondere ein Hauptgetriebe, zwischen den Batterien. Möglich ist auch, dass die Brennkraftmaschine wenigstens teilweise zwischen den Batterien angeordnet ist. Insbesondere liegen sich die Batterien direkt gegenüber. Insbesondere sind die Batterien dabei beide vor oder hinter der Wankstabilisatoreinrichtung angeordnet. Die Aufnahmeeinrichtung kann dazu geeignet und ausgebildet sein, wenigstens eine Batterie vor der Wankstabilisatoreinrichtung an einem Längsträger des Fahrgestells und wenigstens eine Batterie hinter der Wankstabilisatoreinrichtung an einem Längsträger des Fahrgestells zu befestigen. Solche Befestigungen der Batterien sind besonders vorteilhaft für das Fahrverhalten und die Wankstabilität.

Der hier vorgestellte Triebstrang kann mit einem parallelen Hybridantrieb und/oder mit einem seriellen Hybridantrieb und/oder mit einem Mischhybrid-Antrieb ausgestattet sein. Der Mischhybrid-Antrieb ermöglicht insbesondere einen Wechsel zwischen parallelen und seriellen Hybridantrieb. Es ist möglich, dass der Triebstrang als ein leistungsverzweigter Hybridantrieb ausgebildet ist. Beispielsweise treibt die Brennkraftmaschine das Hauptgetriebe und zugleich auch die erste elektrische Maschine an, welche einen Generator bereitstellt. Die von der ersten elektrischen Maschine bereitgestellte Energie wird dann beispielsweise in der Batterieeinrichtung gespeichert und kann zum Beispiel für die zweite und/oder dritte elektrische Maschine verwendet werden.

Die elektrische Maschine weist insbesondere eine Leistung von wenigstens 5 kW und vorzugsweise von wenigstens 10 kW und besonders bevorzugt von wenigstens 20 kW oder mehr auf. Die Leistung der elektrischen Maschine beträgt insbesondere wenigstens ein Zehntel und vorzugsweise wenigstens ein Achtel und besonders bevorzugt wenigstens ein Viertel der Leistung der Brennkraftmaschine. Die elektrische Maschine ist insbesondere über wenigstens eine Welle mit der Brennkraftmaschine und/oder an wenigstens eine Welle der Brennkraftmaschine gekoppelt. Die elektrische Maschine ist insbesondere der Brennkraftmaschine nachgeschaltet. Insbesondere ist die elektrische Maschine zusätzlich zu einer zur Versorgung einer Starterbatterie vorgesehen Lichtmaschine und/oder zu einem Anlasser der Brennkraftmaschine vorgesehen. Im Rahmen der vorliegenden Erfindung wird unter der elektrischen Maschine insbesondere keine Lichtmaschine einer Brennkraftmaschine verstanden. Insbesondere kann die elektrische Maschine der vorliegenden Erfindung bereits durch ihre Leistung von einer solchen Lichtmaschine abgegrenzt werden.

Die elektrische Maschine ist insbesondere in Vorwärtsfahrtrichtung hinter der Brennkraftmaschine angeordnet. Die elektrische Maschine ist insbesondere an dem Fahrgestell befestigt. Die Brennkraftmaschine ist insbesondere in Vorwärtsfahrtrichtung vor der Wankstabilisatoreinrichtung angeordnet. Die Brennkraftmaschine ist insbesondere zwischen der Vorderachseinheit und der Wankstabilisatoreinrichtung angeordnet. Das Hauptgetriebe und/oder das Verteilergetriebe sind insbesondere in Vorwärtsfahrtrichtung hinter der Wankstabilisatoreinrichtung angeordnet. Das Hauptgetriebe und/oder das Verteilergetriebe sind insbesondere zwischen der Wankstabilisatoreinrichtung und der Hinterachseinheit angeordnet.

Unter dem Begriff Schubrohrrahmen bzw. Schubrohr werden erfindungsgemäß auch Konstruktion verstanden, welche mit anderen geeigneten Bauteilen als mit Rohren aufgebaut sind. Bevorzugt umfasst der Schubrohrrahmen Rohre bzw. rohrartige Bauteile.

Der Schubrohrrahmen ist insbesondere rahmenartig und beispielsweise trapezförmig oder dergleichen ausgebildet. Der Schubrohrrahmen ist insbesondere als eine Deichsel ausgebildet oder teil einer solchen. Der Schubrohrrahmen umfasst insbesondere wenigstens eine zwischen den Rädern einer Starrachseinheit verlaufende Querachse und insbesondere wenigstens zwei mit der Querachse verbundene und sich vorzugsweise längs zum Fahrgestell in Richtung einer Fahrzeugmitte erstreckende Schubrohre. Die Schubrohre sind insbesondere über wenigstens ein Querrohr miteinander verbunden. Vorzugsweise verlaufen die Schubrohre eines Schubrohrrahmens seitlich, beispielsweise rechts und links, neben der Brennkraftmaschine und/oder der elektrischen Maschine und/oder dem Hauptgetriebe und/oder dem Verteilergetriebe.

Die wenigstens zwei Starrachseinheiten umfassen insbesondere wenigstens eine erste Achseinheit, welche vorzugsweise als Vorderachseinheit ausgebildet ist. Die wenigstens zwei Starrachseinheiten umfassen insbesondere wenigstens eine zweite Achseinheit, welche vorzugsweise als Hinterachseinheit ausgebildet ist.

Die Starrachseinheit umfasst insbesondere wenigstens zwei Halbwellen bzw. Gelenkwellen zur Drehmomentübertragung von dem Ausgleichsgetriebe zu den Rädern bzw. zu einem Radvorgelege. Vorzugsweise verläuft die Halbwelle zwischen dem Schubrohrrahmen und einem Längsträger des Fahrgestells. Die Halbwelle verläuft insbesondere oberhalb des Schubrohrrahmens. Die Halbwelle verläuft insbesondere unterhalb des Längsträgers.

Im Rahmen der vorliegenden Erfindung wird unter dem Begriff Antreiben insbesondere eine Drehmomentübertragung verstanden. Bei der von der Brennkraftmaschine antreibbaren elektrischen Maschine erfolgt insbesondere eine Drehmomentübertragung von der Brennkraftmaschine auf die elektrische Maschine.

Die Wankstabilisatoreinrichtung dient insbesondere zur Minderung bzw. Verhinderung von Wankbewegungen im Fahrbetrieb und insbesondere bei Kurvenfahrt und/oder beim Überfahren von Hindernissen und zum Beispiel Bodenunebenheiten. Dabei wird unter einer Wankbewegung, welche auch als Wanken bzw. Rollen des Fahrzeugs bezeichnet werden kann, im Wesentlichen eine Drehbewegung des Fahrzeugs um seine Längsachse verstanden.

Die Wankstabilisatoreinrichtung umfasst insbesondere wenigstens einen und vorzugsweise wenigstens zwei schwenkbare Waagbalken. Dabei sind an jedem Waagbalken zwei Schubrohrrahmen befestigt. Die Wankstabilisatoreinrichtung umfasst insbesondere wenigstens ein Waagbalkenlager, in welchem der Waagbalken drehbar bzw. schwenkbar aufgenommen ist. An jedem Längsträger ist vorzugsweise wenigstens ein Waagbalkenlager mit einem Waagbalken angeordnet. Die einzelnen Schubrohrrahmen sind insbesondere über jeweils wenigstens zwei Stabilisatorstreben an die Waagbalken angebunden. Die beiden an der gemeinsamen Wankstabilisatoreinrichtung angebundenen Schubrohrrahmen sind insbesondere um wenigstens eine gemeinsame Drehachse bzw. Schwenkachse bewegbar. Die Drehachse bzw. Schwenkachse des Waagbalkens bzw. des Waagbalkenlagers verläuft insbesondere quer zur Fahrzeuglängsachse bzw. quer zu den Längsträgern des Fahrgestells und insbesondere parallel zu einem Querträger der Wankstabilisatoreinrichtung. Die Wankstabilisatoreinrichtung umfasst insbesondere wenigstens einen Querträger, welcher sich zwischen zwei Längsträgern des Fahrgestells erstreckt. An dem Querträger ist insbesondere wenigstens ein Zentralgelenk und insbesondere Kugelgelenk zur bewegbaren Anbindung der Schubrohrrahmen angeordnet.

Die wenigstens zwei Schubrohrrahmen und insbesondere die Schubrohrrahmen der Vorderachseinheit und der Hinterachseinheit sind insbesondere über jeweils wenigstens ein Zentralgelenk an einer gemeinsamen Aufnahme an dem Fahrgestell angebunden, z. B. an dem Querträger der Wankstabilisatoreinrichtung. Das zentralgelenk befindet sich insbesondere an dem Querrohr des Schubrohrrahmens.

Im Rahmen der vorliegenden Erfindung wird unter den Positionsangaben vor bzw. hinter der Wankstabilisatoreinrichtung insbesondere eine Position in Bezug auf den Querträger und/oder den Waagbalken und/oder die (gemeinsame) Drehachse bzw. Schwenkachse der Waagbalkenlager verstanden. Die hier vorgestellte Fahrzeugbaugruppe kann vorzugsweise auch bei anderen Arten von Kraftfahrzeugen vorteilhaft eingesetzt werden, sodass im Rahmen der vorliegenden Erfindung die Begriffe Nutzfahrzeug und Kraftfahrzeug insbesondere synonym verwendet werden können. Das Nutzfahrzeug ist beispielsweise ein 4x4 oder ein 6x6. Das Nutzfahrzeug kann auch ein 8x8 oder ein 2x4 sein.

Die Brennkraftmaschine ist insbesondere als ein Verbrennungsmotor und vorzugsweise als ein Dieselmotor oder ein Ottomotor oder ein Vielstoffmotor oder ein Gasmotor ausgebildet.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Figur 1: eine schematische Darstellung einer erfindungsgemäßen Fahrzeugbaugruppe in einer Draufsicht;
- Figur 2: eine schematische Darstellung einer anderen erfindungsgemäßen Fahrzeugbaugruppe in einer Draufsicht;
- Figur 3: eine schematische Darstellung einer weiteren erfindungsgemäßen Fahrzeugbaugruppe in einer Draufsicht;
- Figur 4: eine schematische Darstellung einer weiteren erfindungsgemäßen Fahrzeugbaugruppe in einer Draufsicht;
- Figur 5: eine schematische Darstellung einer weiteren erfindungsgemäßen Fahrzeugbaugruppe in einer Draufsicht;
- Figur 6: eine schematische Darstellung einer weiteren erfindungsgemäßen Fahrzeugbaugruppe in einer Draufsicht; und
- Figur 7: eine schematische Darstellung einer Fahrzeugbaugruppe in einer perspektivischen Ansicht von schräg oben.

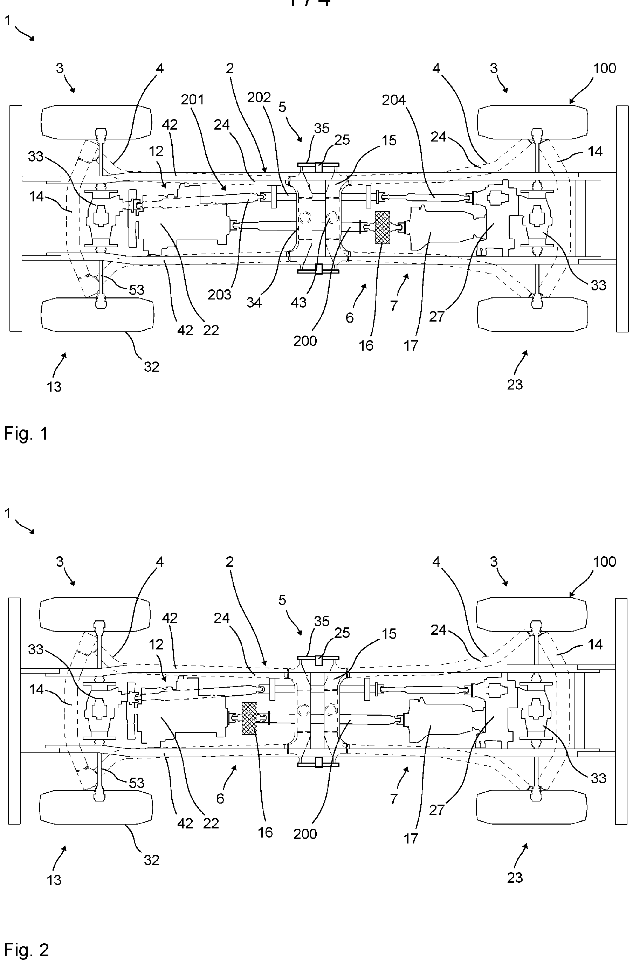

Die Figur 1 zeigt eine erfindungsgemäße Fahrzeugbaugruppe 1 für ein hier nur teilweise dargestelltes geländegängiges und hier beispielhaft als 4x4 ausgebildetes Nutzfahrzeug 100. Die Fahrzeugbaugruppe 1 umfasst ein Fahrgestell 2 und einen Triebstrang 12 mit einer Brennkraftmaschine bzw. Verbrennungsmotor 22 und einer Getriebeeinrichtung 7. Der Triebstrang 12 ist hier mit zwei Starrachseinheiten 3 ausgestattet, umfassend eine erste als Vorderachseinheit 13 ausgebildete Achseinheit und eine als Hinterachseinheit 23 ausgebildete zweiten Achseinheit.

Die Getriebeeinrichtung 7 umfasst hier ein Hauptgetriebe 17, welches über eine Welle 200 mit der Brennkraftmaschine 22 verbunden ist und direkt an einem Verteilergetriebe 27 sitzt. Das Verteilergetriebe 27 ist hier direkt an ein Ausgleichsgetriebe 33 der Hinterachseinheit 23 gekoppelt. Dadurch ergibt sich eine sogenannte Transaxle-Bauweise. Dabei sind der Motor 22 vorne und das Hauptgetriebe 17 sowie das Verteilergetriebe 27 an der angetriebenen Hinterachseinheit 23 angeordnet. Die Welle 200 zwischen der Getriebeeinrichtung 7 und dem Motor 22 ist hier als eine Transaxle-Welle ausgebildet.

Das Verteilergetriebe 27 ist hier über eine Wellenanordnung 201 mit drei Wellen 202-204 an ein Ausgleichsgetriebe 33 der Vorderachseinheit 13 gekoppelt. Die Ausgleichsgetriebe sind hier über Halbwellen 53 an die Räder 32 bzw. deren hier nicht sichtbare Radvorgelege 301 gekoppelt.

Die Starrachseinheiten 3 umfassen hier jeweils einen Schubrohrrahmen 4, welcher eine zwischen den Rädern 32 verlaufende Querachse 14 und zwei mit der Querachse 14 verbundene Schubrohre 24 umfasst. Die Schubrohre 24 eines Schubrohrrahmens 4 erstrecken sich hier längs in Richtung der Fahrzeugmitte und sind dort über ein Querrohr 34 verbunden.

Die Getriebeeinrichtung 7 ist mit ihren drehmomentübertragenden Komponenten außerhalb des Schubrohrrahmens 4 angeordnet. Dabei sind die Ausgleichsgetriebe 33 getrennt von den Querachsen 14 der Schubrohrrahmen 4 an dem Fahrgestell 2 befestigt. Die Starrachseinheiten 3 sind hier somit in der Bauweise einer De-Dion-Achse ausgeführt. Die zum Antrieb vorgesehenen Halbwellen 53 verlaufen ebenfalls außerhalb der Schubrohrrahmen 4.

Das Fahrgestell 2 bzw. Chassis ist hier als Leiterrahmen ausgebildet und umfasst einen rechten und einen linken Längsträger 42. Die Längsträger 42 sind hier an den Enden über entsprechende Querstreben miteinander verbunden. In einem zentralen Bereich sind die Längsträger 42 hier zudem mit einem zu einer Wankstabilisatoreinrichtung 5 gehörenden Querträger 15 verbunden. In der hier gezeigten Ausführung wird der Querträger 15 durch zwei parallele und beabstandete Querträgerelemente bereitgestellt. Der Leiterrahmen kann weitere hier nicht näher beschriebene Querstreben bzw. Versteifungen aufweisen.

Die Schubrohrrahmen 4 sind hier jeweils über ein Zentralgelenk 43 bewegbar an dem Fahrgestell 2 befestigt. Dabei sind die Zentralgelenke 43 an den Querrohren 34 und an dem Querträger 15 angebunden und beispielsweise als Kugelgelenke oder Kugelflächengelenke oder auch als Gummipuffer ausgeführt. Dadurch ist eine besonders große Verschränkung der Achseinheiten 3 bzw. der Räder 32 möglich, sodass auch große Hindernisse gut überfahren werden können.

Um die Fahrstabilität und Geländegängigkeit zu verbessern, ist hier eine Wankstabilisatoreinrichtung 5 vorgesehen. Dadurch wird eine erhebliche Minderung von Wankbewegungen im Fahrbetrieb bzw. beim Überfahren von Hindernissen erreicht. Die Wankstabilisatoreinrichtung 5 umfasst hier zwei gegenüberliegende Waagbalken 35, welche über jeweils ein Waagbalkenlager 25 an einem Längsträger 42 drehbar gelagert sind.

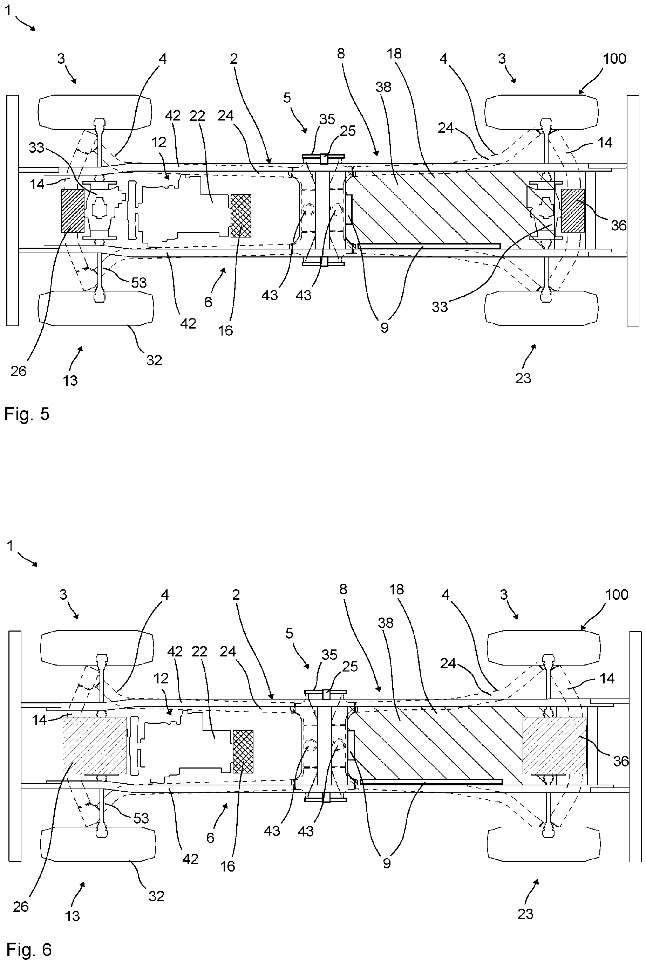

An je einem Waagbalken 35 sind hier die Schubrohrrahmen 4 der Vorderachseinheit 13 und der Hinterachseinheit 23 angebunden. Dazu ist zwischen dem Waagbalken 35 und dem jeweiligen Schubrohrrahmen 4 eine in der Figur 6 besonders gut zu erkennende Wankstabilisatorstrebe 45 angeordnet. Durch diese Anbindung an zwei gemeinsame Waagbalken 35 können die Schubrohrrahmen 4 zueinander in erheblichem Maß verschränkt werden, während ungünstigen Wankbewegungen entgegengewirkt wird.

Um die Fahrzeugbaugruppe 1 besonders flexibel und vielseitig einsetzen zu können, ist der Triebstrang 12 hier mit einer elektrischen Maschineneinrichtung 6 mit einer ersten elektrischen Maschine 16 ausgestattet. So kann beispielsweise ein Hybridantrieb verwirklicht werden oder es werden Nebenaggregate mit elektrischem Strom versorgt.

Die elektrische Maschine 16 dient hier als Generator und wird von der Brennkraftmaschine 22 angetrieben. Dazu ist der Generator 16 hier an die Transaxle-Welle 200 angebunden und zwischen der Brennkraftmaschine 22 und dem Hauptgetriebe 17 angeordnet. Um eine optimale Wirkung der Wankstabilisatoreinrichtung 5 und der Zentralgelenke 43 zu gewährleisten, ist der Generator 16 in betriebsgemäßer Vorwärtsfahrtrichtung hinter der Wankstabilisatoreinrichtung 5 angeordnet.

Die Figur 2 zeigt die Fahrzeugbaugruppe 1 mit einer als Generator ausgebildeten elektrischen Maschine 16, welche hier in Vorwärtsfahrtrichtung vor der Wankstabilisatoreinrichtung 5 angeordnet ist. Dabei ist der Generator 16 an die Brennkraftmaschine 22 angekoppelt und über die Transaxle-Welle 200 mit dem Hauptgetriebe 17 verbunden. Auch diese Anordnung der elektrischen Maschine 16 hat sich als besonders vorteilhaft im Gelände erwiesen und unterstützt die Funktion der Wankstabilisatoreinrichtung 5. Durch die hier und in der Figur 1 gezeigte Einkopplung der elektrischen Maschine 16 kann die elektrische Energieerzeugung mittels der Brennkraftmaschine 22 unabhängig von einem Fahrbetrieb erfolgen.

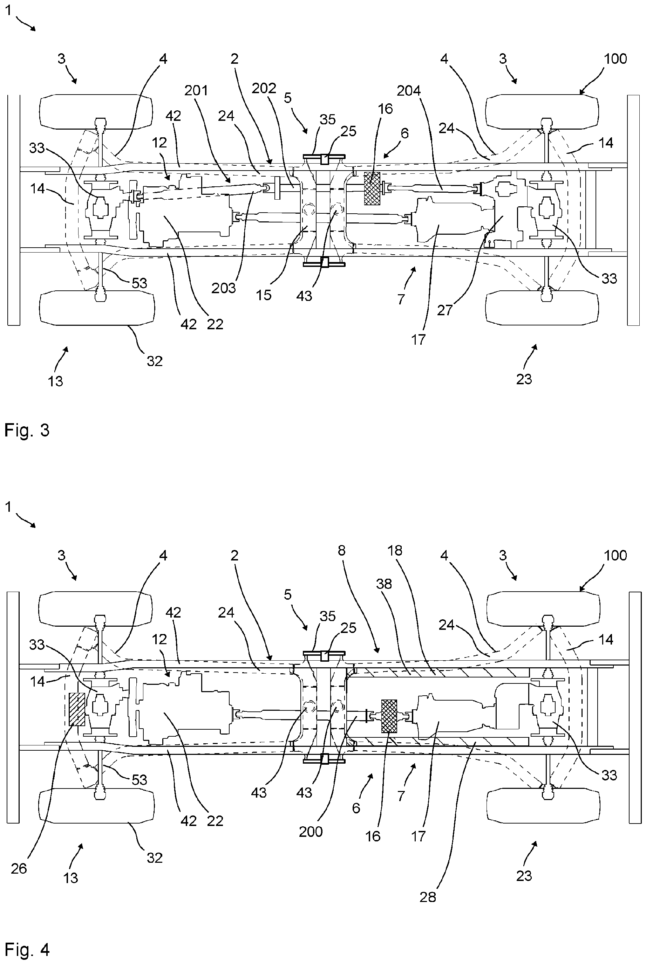

In der Figur 3 ist eine alternative Anordnung der als Generator ausgebildeten elektrischen Maschine 16 gezeigt. Diese ist hier ebenfalls in Vorwärtsfahrtrichtung hinter der Wankstabilisatoreinrichtung 5 angeordnet. Der Generator 16 ist jedoch dem Verteilergetriebe 27 nachgeschaltet. Dadurch wird der Generator 16 hier nur im Fahrbetrieb mittels der Brennkraftmaschine 22 angetrieben. Es kann vorgesehen sein, dass der Generator 16 auch im Schubbetrieb angetrieben wird.

Dabei ist der Generator 16 hier an die mittlere Welle 202 der Wellenanordnung 201 gekoppelt. Diese Welle 202 ist über die Welle 204 mit dem Verteilergetriebe 27 und über die Welle 203 mit dem Ausgleichsgetriebe 33 der Vorderachseinheit 13 verbunden. Die Welle 202 verläuft hier unterhalb der Wankstabilisatoreinrichtung 5 und kann drehbar gelagert an dem Fahrgestell 2 befestigt sein.

Die Figur 4 zeigt die Fahrzeugbaugruppe 1 mit einem Hybridantrieb. Dazu ist die als Generator ausgebildete elektrische Maschine 16 wie mit Bezug zu der Figur 1 beschrieben in den Triebstrang 12 eingebunden. Es kann auch die mit Bezug zur Figur 2 beschriebene Anordnung des Generators 16 vorgesehen sein.

Der Generator 16 dient zum Aufladen zweier Batterien 18, 28 einer Batterieeinrichtung 8. Die Batterieeinrichtung 8 dient hier zur Energieversorgung einer als Elektromotor ausgebildeten und als Fahrantrieb für die Vorderachseinheit 13 dienende elektrische Maschine 26. Dadurch wird hier ein Allradbetrieb ermöglicht, wobei zugleich auf das Verteilergetriebe 27 und die Wellenanordnung 201 verzichtet werden kann.

Die zweite elektrische Maschine 26 ist hier oberhalb der Querachse 14 und in Vorwärtsfahrtrichtung vor dem Ausgleichsgetriebe 33 angeordnet. Der Fahrantrieb 26 kann bedarfsweise zugeschaltet werden. Es kann vorgesehen sein, dass der Generator 16 sowohl von der Brennkraftmaschine 22 als auch im Schubbetrieb angetrieben wird, um die Batterieeinrichtung 8 aufzuladen. Die Batterieeinrichtung 8 kann eine hier nicht näher dargestellte Leistungselektronik 38 und/oder andere Steuer- und Kontrolleinrichtungen umfassen.

Die Figur 5 zeigt die Fahrzeugbaugruppe 1 mit einem seriellen Hybridantrieb. Dazu werden die beiden Starrachseinheiten 3 hier nur durch einen elektrischen Fahrantrieb angetrieben. An der Vorderachseinheit 13 sind hier eine als Elektromotor ausgebildete zweite elektrische Maschine 26 und an der Hinterachseinheit 23 eine ebenfalls als Elektromotor ausgebildete dritte elektrische Maschine 36 vorgesehen.

Die Fahrmotoren 26, 36 sind hier an jeweils ein Ausgleichsgetriebe 33 angekoppelt. Die Fahrmotoren 26, 36 sind hier oberhalb der jeweiligen Querachse 14 angeordnet. Die erste elektrische Maschine 16 ist als Generator ausgebildet und wird von der Brennkraftmaschine 22 angetrieben. Der Generator 16 dient zum Aufladen der Batterieeinrichtung 8.

In der hier gezeigten Ausgestaltung ist die Batterieeinrichtung 8 nur mit einer einzelnen Batterie 18 ausgestattet. Die Batterie 18 ist hier hinter der Wankstabilisatoreinrichtung 5 und zwischen den Längsträgern 42 angeordnet. Zur Befestigung der Batterie 18 an dem Fahrgestell 2 ist eine hier nur schematisch dargestellte Aufnahmeeinrichtung 9 vorgesehen. Beispielsweise erstreckt sich die Aufnahmeeinrichtung 9 entlang eines Längsträgers 42 oder beider Längsträger 42 und/oder entlang des Querträgers 15.

Um eine besonders flexible Verwendung der Fahrzeugbaugruppe 1 zu ermöglichen, bietet die Aufnahmeeinrichtung 9 hier die Möglichkeit, entweder die Batterie 18 oder das Hauptgetriebe 17 sowie das Verteilergetriebe 27 am Fahrgestell 2 zu befestigen. Das bietet eine besonders zügige und modulare Umrüstung von einem konventionellen zu einem Hybridantrieb oder umgekehrt.

Die Aufnahmeeinrichtung 9 kann auch zur Befestigung der beiden Batterien 18, 28 der mit Bezug zur Figur 4 beschriebenen Fahrzeugbaugruppe 1 vorgesehen sein. Dann dient die Aufnahmeeinrichtung 9 dazu, die eine Batterie 18 an dem rechten Längsträger 42 und die andere Batterie 28 an dem linken Längsträger 42 zu befestigen. In dieser Ausgestaltung können das Hauptgetriebe 17 und das Verteilergetriebe 27 im Triebstrang 12 verbleiben und erstrecken sich zwischen den beiden Batterien 18, 28. Das bietet eine besonders zügige und modulare Umrüstung von einem konventionellen zu einem teilelektrischen Antrieb oder umgekehrt.

Die Figur 6 zeigt eine Ausgestaltung der mit Bezug zu der Figur 5 beschriebenen Fahrzeugbaugruppe 1, bei welcher die Fahrmotoren 26, 36 die Ausgleichsgetriebe 33 der jeweiligen Achseinheit 13, 23 ersetzen bzw. bereitstellen. Das hat den Vorteil, dass an den Achseinheiten 13, 23 auf mechanische Ausgleichsgetriebe 33 verzichtet werden kann, sodass Gewicht eingespart und Bauraum gewonnen wird. Vom jeweiligen Fahrmotor 26, 26 aus erfolgt dann insbesondere eine mechanische Momentübertragung zu den Rädern 32 bzw. Radvorgelegen 201 der entsprechenden Achseinheit 13, 23.

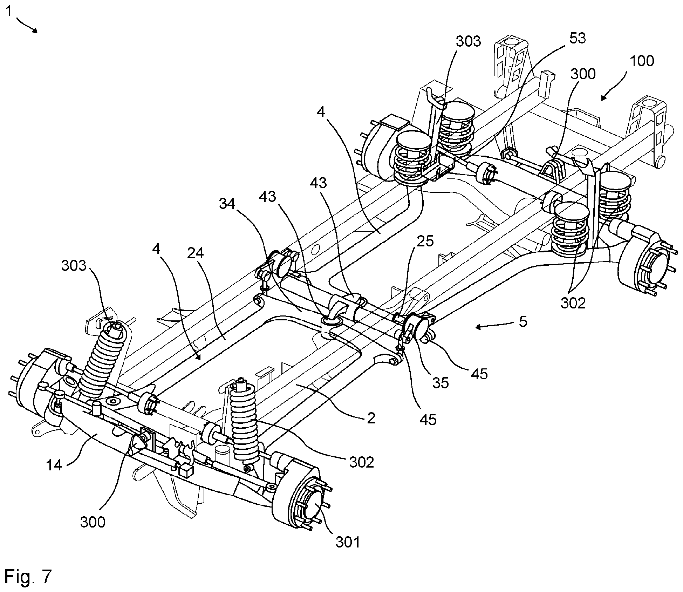

Weitere Ausführungen der Fahrzeugbaugruppe 1 sind in der Figur 7 näher dargestellt. Dort ist die Ausgestaltung der Schubrohrrahmen 4 und deren Anbindung an das Fahrgestell 2 mittels der Wankstabilisatoreinrichtung 5 und der Zentralgelenke 43 besonders gut zu erkennen. In der dort gezeigten Ausführung sind die Starrachseinheiten 3 zudem mit jeweils einem Wattgestänge 300 ausgestattet. Es können auch andere geeignete Arten von Stabilisatoren vorgesehen sein. Zudem ist die dort gezeigte Vorderachseinheit 13 mit zu einem Federbein zusammengesetzten Federn 302 und Dämpfern 303 ausgestattet. Die Hinterachseinheit 23 ist mit vier Federn 302 und zwei Dämpfern 303 ausgestattet. Von der Getriebeeinrichtung 7 sind in der Figur 7 nur die Halbwellen 53 und die Radvorgelege 301 gezeigt.

**Bezugszeichenliste:**

| | | | |
|---|---|---|---|
| 1 | Fahrzeugbaugruppe | 53 | Halbwelle |
| 2 | Fahrgestell | 100 | Nutzfahrzeug |
| 3 | Starrachseinheit | 200 | Welle |
| 4 | Schubrohrrahmen | 201 | Wellenanordnung |
| 5 | Wankstabilisatoreinrichtung | 202 | Welle |
| | | 203 | Welle |
| 6 | Maschineneinrichtung | 204 | Welle |
| 7 | Getriebeeinrichtung | 300 | Wattgestänge |
| 8 | Batterieeinrichtung | 301 | Radvorgelege |
| 9 | Aufnahmeeinrichtung | 302 | Feder |
| 12 | Triebstrang | 303 | Dämpfer |
| 13 | Achseinheit, Vorderachseinheit | | |
| 14 | Querachse | | |
| 15 | Querträger | | |
| 16 | Maschine | | |
| 17 | Hauptgetriebe | | |
| 18 | Batterie | | |
| 22 | Brennkraftmaschine | | |
| 23 | Achseinheit, Hinterachseinheit | | |
| 24 | Schubrohr | | |
| 25 | Waagbalkenlager | | |
| 26 | Maschine | | |
| 27 | Verteilergetriebe | | |
| 28 | Batterie | | |
| 32 | Rad | | |
| 33 | Ausgleichsgetriebe | | |
| 34 | Querrohr | | |
| 35 | Waagbalken | | |
| 36 | Maschine | | |
| 38 | Leistungselektronik | | |
| 42 | Längsträger | | |
| 43 | Zentralgelenk | | |
| 45 | Wankstabilisatorstrebe | | |

## Patentansprüche

1. Fahrzeugbaugruppe (1) für ein insbesondere geländegängiges Nutzfahrzeug (100), umfassend wenigstens ein Fahrgestell (2) und wenigstens einen an dem Fahrgestell (2) aufnehmbaren Triebstrang (12), wobei der Triebstrang (12) wenigstens eine Brennkraftmaschine (22) und wenigstens zwei Starrachseinheiten (3) mit jeweils wenigstens einem Schubrohrrahmen (4) umfasst, wobei die Schubrohrrahmen (4) der wenigstens zwei Starrachseinheiten (3) mittels wenigstens einer am Fahrgestell (2) befestigten Wankstabilisatoreinrichtung (5) gelenkartig miteinander verbunden sind,
**dadurch gekennzeichnet,**
**dass** der Triebstrang (12) wenigstens eine von der Brennkraftmaschine (22) antreibbare und in Vorwärtsfahrtrichtung vor und/oder hinter der Wankstabilisatoreinrichtung (5) angeordnete elektrische Maschine (16) umfasst.

2. Fahrzeugbaugruppe (1) nach dem vorhergehenden Anspruch, wobei die Starrachseinheiten (3) als De-Dion-Achsen ausgebildet sind.

3. Fahrzeugbaugruppe (1) nach einem der vorhergehenden Ansprüche, wobei die Starrachseinheiten (3) jeweils wenigstens ein Ausgleichsgetriebe (33) aufweisen und wobei die Ausgleichsgetriebe (33) außerhalb der Schubrohrrahmen (4) angeordnet sind.

4. Fahrzeugbaugruppe (1) nach einem der vorhergehenden Ansprüche, wobei die elektrische Maschine (16) zur elektrischen Energieerzeugung unabhängig von einem Fahrbetrieb mittels der Brennkraftmaschine (22) antreibbar ist oder wobei die elektrische Maschine (16) zur elektrischen Energieerzeugung nur bei einem Fahrbetrieb mittels der Brennkraftmaschine (22) antreibbar ist.

5. Fahrzeugbaugruppe (1) nach einem der vorhergehenden Ansprüche, wobei der Triebstrang (12) wenigstens eine von der Brennkraftmaschine (22) antreibbare Getriebeeinrichtung (7) mit wenigstens einem Hauptgetriebe (17) umfasst und wobei die elektrische Maschine (16) zwischen der Brennkraftmaschine (22) und dem Hauptgetriebe (17) eingebunden ist.

6. Fahrzeugbaugruppe (1) nach dem vorhergehenden Anspruch, wobei unterhalb der Wankstabilisatoreinrichtung (5) wenigstens eine Welle (200) zur Drehmomentübertragung zwischen Brennkraftmaschine (22) und Hauptgetriebe (17) verläuft und wobei durch die Welle (200) auch die elektrische Maschine (16) antreibbar ist.

7. Fahrzeugbaugruppe (1) nach einem der vorhergehenden Ansprüche, wobei der Triebstrang (12) wenigstens eine Getriebeeinrichtung (7) mit wenigstens einem Verteilergetriebe (27) umfasst und wobei das Verteilergetriebe (27) direkt an eines der Ausgleichsgetriebe (33) angebunden ist und wobei die elektrische Maschine (16) zwischen dem Verteilergetriebe (27) und einem nicht direkt an das Verteilergetriebe (27) angebunden Ausgleichsgetriebe (33) eingebunden ist.

8. Fahrzeugbaugruppe (1) nach dem vorhergehenden Anspruch, wobei zwischen dem Verteilergetriebe (27) und dem nicht direkt an das Verteilergetriebe (27) angebundenen Ausgleichsgetriebe wenigstens eine Wellenanordnung (201) verläuft und wobei die elektrische Maschine (16) durch wenigstens eine unterhalb der Wankstabilisatoreinrichtung (5) verlaufende und an dem Fahrgestell (2) drehbar gelagert befestigte Welle (202) der Wellenanordnung (201) antreibbar ist.

9. Fahrzeugbaugruppe (1) nach einem der vorhergehenden Ansprüche, wobei die elektrische Maschine (16) dazu geeignet und ausgebildet ist, elektrisch betreibbare Nebenaggregate mit Energie zu versorgen und insbesondere unmittelbar zu versorgen und wobei vorzugsweise der elektrischen Maschine (16) wenigstens eine Schwungradeinrichtung als Energiespeicher zugeordnet ist.

10. Fahrzeugbaugruppe (1) nach einem der vorhergehenden Ansprüche, wobei der Triebstrang (12) wenigstens eine zweite elektrische Maschine (26) umfasst und wobei wenigstens eine der Starrachseinheiten (3), insbesondere eine Vorderachseinheit (13), nur mittels der zweiten elektrischen Maschine (26) antreibbar ist, und wobei vorzugsweise der Schubrohrrahmen (4) wenigstens eine zwischen den Rädern (32) verlaufende Querachse (14) umfasst und wobei die zweite elektrische Maschine (26) oberhalb der Querachse (14) und in Vorwärtsfahrtrichtung vor dem Ausgleichsgetriebe (33) der von der zweiten elektrischen Maschine (26) antreibbaren Starrachseinheit (3) angeordnet ist und/oder wobei der Triebstrang (12) in einem Allradbetrieb betreibbar ist und wobei im Allradbetrieb die zweite elektrische Maschine (26) ein Drehmoment auf eine Vorderachseinheit (13) und die Brennkraftmaschine (22) ein Drehmoment auf wenigstens eine Hinterachseinheit (23) überträgt.

11. Fahrzeugbaugruppe (1) nach einem der vorhergehenden Ansprüche, wobei der Triebstrang (12) wenigstens eine dritte elektrische Maschine (36) umfasst und wobei wenigstens eine der Starrachseinheiten (3), insbesondere die Hinterachseinheit (23), nur mittels der dritten elektrischen Maschine (36) antreibbar ist, und wobei vorzugsweise der Schubrohrrahmen (4) wenigstens eine zwischen zwei Rädern (32) verlaufende Querachse (14) umfasst und wobei die dritte elektrische Maschine (36) oberhalb der Querachse (14) und in Vorwärtsfahrtrichtung hinter dem Ausgleichsgetriebe (33) der von der dritten elektrischen Maschine (36) antreibbaren Starrachseinheit (3) angeordnet ist.

12. Fahrzeugbaugruppe (1) nach einem der vorhergehenden Ansprüche, wobei der Triebstrang (12) wenigstens eine vor der Wankstabilisatoreinrichtung (5) angeordnete zweite elektrische Maschine (26) zum Antrieb einer Vorderachseinheit (13) und wenigstens eine hinter der Wankstabilisatoreinrichtung (5) angeordnete dritte elektrische Maschine (36) zum Antrieb einer Hinterachseinheit (23) umfasst und wobei die elektrischen Maschinen (26, 36) jeweils ein Ausgleichsgetriebe (33) der Vorderachseinheit (13) bzw. der Hinterachseinheit (23) bereitstellen.

13. Fahrzeugbaugruppe (1) nach einem der vorhergehenden Ansprüche, wobei die wenigstens eine elektrische Maschine (16) dazu geeignet und ausgebildet ist, von der Brennkraftmaschine (22) angetrieben zu werden und dabei wenigstens eine Batterie (18) wenigstens einer Batterieeinrichtung (8) zur Energieversorgung wenigstens einer als Fahrantrieb dienenden elektrischen Maschine (26, 36) aufzuladen und wobei die Batterie (18) mittels wenigstens einer Aufnahmeeinrichtung (9) in Vorwärtsfahrtrichtung vor oder hinter der Wankstabilisatoreinrichtung (5) und wenigstens teilweise oberhalb der Schubrohrrahmen (4) an dem Fahrgestell (2) befestigt ist.

14. Fahrzeugbaugruppe (1) nach dem vorhergehenden Anspruch, wobei die Aufnahmeeinrichtung (9) dazu geeignet und ausgebildet ist, wahlweise die wenigstens eine Batterie (18) oder wenigstens ein drehmomentübertragend mit der Brennkraftmaschine (22) gekoppeltes Hauptgetriebe (17) einer Getriebeeinrichtung (7) an das Fahrgestell (2) anzubinden.

15. Fahrzeugbaugruppe (1) nach einem der beiden vorhergehenden Ansprüche, wobei die Batterieeinrichtung (8) wenigstens zwei Batterien (18, 28) umfasst und wobei die Aufnahmeeinrichtung (9) dazu geeignet und ausgebildet ist, wenigstens eine Batterie (18) an einem rechten Längsträger (42) des Fahrgestells (2) und wenigstens eine Batterie (28) an einem linken Längsträger (42) des Fahrgestells (2) zu befestigen, sodass sich wenigstens ein Teil der Getriebeeinrichtung (7), insbesondere ein Hauptgetriebe (17), zwischen den Batterien (18, 28) erstreckt.
